Europäisches Patentamt

European Patent Office

Office européen des brevets

(19)

(11) **EP 0 728 712 B1**

(12) **FASCICULE DE BREVET EUROPEEN**

(45) Date de publication et mention
de la délivrance du brevet:
**26.04.2000  Bulletin 2000/17**

(51) Int Cl.7: **C03C 17/34**

(21) Numéro de dépôt: **96400367.7**

(22) Date de dépôt: **22.02.1996**

(54) **Substrat transparent à revêtement anti-reflets**

Transparentes Substrat mit Antireflektionsbeschichtung

Transparent substrate with anti-reflection coating

(84) Etats contractants désignés:
**AT BE CH DE ES FR IT LI LU NL SE**

(30) Priorité:  **23.02.1995  FR 9502102**

(43) Date de publication de la demande:
**28.08.1996  Bulletin 1996/35**

(60) Demande divisionnaire: **99100997.8 / 0 911 302**

(73) Titulaire: **SAINT-GOBAIN VITRAGE
92400 Courbevoie (FR)**

(72) Inventeurs:
 • **Anderson, Charles-Edward
  92400 Courbevoie (FR)**
 • **Macquart, Philippe
  92600 Asnieres (FR)**

(74) Mandataire: **Renous Chan, Véronique et al
  Saint-Gobain Recherche,
  39, Quai Lucien Lefranc
  F-93300 Aubervilliers (FR)**

(56) Documents cités:
**EP-A- 0 263 541          EP-A- 0 489 621
EP-A- 0 492 785          EP-A- 0 521 602
EP-A- 0 544 577          WO-A-92/04185
US-A- 2 617 741          US-A- 4 995 893**

 • **CHEMICAL ABSTRACTS, vol. 101, no. 8, 20 Août
  1984 Columbus, Ohio, US; abstract no. 59131a,
  page 241; XP002001957 & JP-A-05 945 943
  (JAPAN AUTO PARTS INDUSTRIES) 15 Mars
  1984**

**Description**

L'invention concerne les substrats transparents, tout particulièrement verriers, qui sont munis d'un revêtement anti-reflets, ainsi que leur mode de fabrication. Elle concerne également leur utilisation, notamment en tant que vitrages. Un revêtement anti-reflets est usuellement constitué d'un empilement de couches minces interférentielles, en général une alternance de couches à haut et bas indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc s'accroître son ratio lumière transmise/lumière réfléchie, ce qui améliore la visibilité des objets placés derrière lui.

On peut alors l'employer dans de nombreuses applications, par exemple pour protéger un tableau éclairé par une lumière placée derrière l'observateur, ou pour constituer ou faire partie d'une vitrine de magasin, afin de mieux distinguer ce qui se trouve dans la vitrine, même lorsque l'éclairage intérieur est faible par rapport à l'éclairage extérieur.

Les performances d'un revêtement anti-reflets peuvent être mesurées ou évaluées suivant différents critères. Viennent en premier, bien sûr, les critères optiques. On peut considérer qu'un « bon » revêtement anti-reflets doit pouvoir abaisser la réflexion lumineuse d'un substrat en verre clair standard jusqu'à une valeur donnée, par exemple 2%, voire 1% et moins. De même, il peut être important que ce revêtement conserve au substrat une colorimétrie satisfaisante, par exemple neutre, très proche de celle du substrat nu. D'autres critères secondaires peuvent aussi être pris en compte suivant l'application envisagée, notamment la durabilité chimique et/ou mécanique du revêtement, le coût des matériaux utilisés ou des techniques à employer pour le fabriquer.

Il est connu de la demande de brevet WO-92/04185 un revêtement anti-reflets déposé sur un substrat transparent et constitué d'une alternance de couches à haut indice en oxyde de niobium et bas indice en oxyde de silicium. Ses performances optiques sont intéressantes. Utiliser de l'oxyde de niobium est avantageux sur le plan industriel, car c'est un matériau qui se dépose plus vite que d'autres oxydes à haut indice du type oxyde de titane par des techniques sous vide connues, du type pulvérisation cathodique réactive. Cependant un tel empilement s'est avéré sensible à tout traitement thermique: à haute température, ses propriétés optiques se modifient de manière défavorable, notamment sur le plan de sa colorimétrie en réflexion. C'est un inconvénient dans la mesure où l'on peut vouloir conférer au substrat, tout particulièrement verrier, et déjà muni de son revêtement, des propriétés mécaniques ou esthétiques qui ne peuvent être obtenues que par des traitements thermiques à des températures qui peuvent approcher la température de ramollissement du verre. Il peut s'agir notamment d'un bombage pour conférer un certain galbe au substrat, d'un recuit pour le durcir, ou d'une trempe pour éviter de blesser en cas de bris.

Le but de l'invention est alors de pallier cet inconvénient, en cherchant à mettre au point un nouveau type de revêtement multicouches anti-reflets qui soit performant optiquement, et qui conserve ses performances, que son substrat porteur soit ensuite soumis ou non à un traitement thermique.

L'invention a pour objet un substrat verrier selon revendication 1, comportant sur au moins une de ses faces un revêtement anti-reflets comprenant un empilement de couches minces de matériaux diélectriques d'indices de réfraction alternativement forts et faibles. L'invention consiste à prévenir la modification des propriétés optiques du revêtement au cas où le substrat est soumis à un traitement thermique du type trempe, bombage ou recuit, en prévoyant que la (les) couche(s) de l'empilement qui est (sont) susceptible(s) de détérioration au contact d'ions alcalins du type ions sodium émis par diffusion du substrat soit (soient) séparée(s) dudit substrat par au moins une couche qui fait partie du revêtement anti-reflets et qui fait « écran » à la diffusion des ions alcalins.

Il s'est en effet avéré, de manière surprenante, que la modification défavorable de l'aspect optique des revêtements anti-reflets sous l'effet de la chaleur était due à la diffusion d'ions alcalins provenant du verre, ces ions venant s'insérer dans au moins certaines des couches du revêtement, et de fait les détériorer en les modifiant structurellement. La solution selon l'invention a alors consisté non pas à bannir du revêtement anti-reflet tout matériau « sensible » aux ions alcalins, mais plutôt à l'isoler de la surface du verre par une couche « écran » bloquant le processus de diffusion des alcalins. Cette couche est en outre choisie de manière à pouvoir remplir, en parallèle, une fonction optique adéquate dans un revêtement anti-reflets. Il ne s'agit donc pas d'une couche additionnelle venant compliquer la structure d'un revêtement anti-reflets habituel, ce qui est très avantageux sur le plan industriel.

Ces couches « écran » permettent donc de fabriquer des revêtements anti-reflets aptes à supporter sans modification optique notable des traitements thermiques, alors même qu'ils comprennent des matériaux sensibles aux alcalins mais présentant beaucoup d'autres avantages par ailleurs.

Ainsi, les revêtements anti-reflets de l'invention comprennent de préférence des couches d'oxyde de niobium en tant que couches à haut indice de réfraction (indice de réfraction d'environ 2,30), mais disposées dans le revêtement de manière à ne pas pouvoir être en contact avec les alcalins du verre. L'oxyde de niobium est en effet un matériau intéressant, qui, comme évoqué précédemment, se dépose assez rapidement par pulvérisation cathodique réactive, présente un indice de réfraction suffisamment élevé et une durabilité notamment mécanique, satisfaisante.

Les revêtements anti-reflets selon l'invention peuvent aussi comprendre des couches d'autres matériaux sensibles aux alcalins que l'oxyde de niobium. Il peut s'agir notamment d'oxyde de tungstène, à haut indice de réfraction (indice d'environ 2,17), dont l'aspect optique peut se modifier par insertion d'ions sodium.Il en est de même pour l'oxyde de cérium $CeO_2$. Il peut aussi s'agir d'oxyde de bismuth, également à haut indice (notamment de l'ordre de 2,30 à 2,52) ou d'oxydes à valences multiples.

De préférence, les revêtements anti-reflets selon l'invention sont conçus de manière à ce que, d'une part, les couches de matériau diélectrique dites à faible indice aient un indice de réfraction compris entre 1,35 et 1,70, notamment entre 1,38 et 1,68, et, d'autre part les couches de matériau diélectrique dites à fort indice aient un indice de réfraction d'au moins 1,80, et notamment compris entre 1,80 et 2,60, de préférence entre 2 et 2,45, par exemple entre 2,10 et 2,35. L'effet anti-reflet n'est en effet pleinement obtenu que s'il y a une différence d'indice de réfraction significative entre les couches à haut et bas indices qui se trouvent alternées.

Plusieurs modes de réalisation de la couche « écran » selon l'invention existent. De manière générale, plus elle va se trouver proche de la surface du verre et plus elle va pouvoir stopper au plus vite la diffusion des ions alcalins à travers l'empilement.

Tout d'abord, cette couche écran peut être une des couches à faible indice de l'empilement, notamment la « première » couche à faible indice, c'est-à-dire la couche à faible indice la plus proche du verre. De préférence, cette première couche a une épaisseur optique comprise entre 40 et 70 nm, notamment d'environ entre 45 et 60 nm. Elle peut être constituée de différents matériaux qui tous ont un faible indice et stoppent la migration des alcalins, et qui sont notamment choisis parmi l'oxyde de silicium $SiO_2$, l'oxyde d'aluminium dopé du type $Al_2O_3$:F ou un mélange de ces composés. (le terme « dopage », ici, signifie que le taux de fluor contenu dans la couche est suffisant pour abaisser l'indice de réfraction de l'oxyde d'aluminium à des valeurs permettant de l'utiliser en tant que couche à bas indice).

Un revêtement anti-reflets a usuellement comme première couche une couche à haut indice. Dès que la couche écran est une couche à faible indice, il est donc important que la couche à haut indice sur laquelle elle se trouve généralement disposée soit choisie en un matériau qui est apte à conserver sensiblement les mêmes caractéristiques, notamment optiques, en cas de traitement thermique. Si ce matériau doit ne pas se détériorer au contact d'ions alcalins, il peut cependant légèrement se modifier sur le plan cristallographique notamment, tant que cela n'a pas de répercussions néfastes sur ses propriétés optiques. Des matériaux tels que l'oxyde d'étain $SnO_2$, éventuellement dopé, à base d'oxyde de zinc ZnO ou à base d'oxyde de tantale $Ta_2O_5$ ou de zirconium $ZrO_2$ peuvent convenir.

Un revêtement anti-reflets selon l'invention peut comprendre seulement deux séquences successives de couches à fort et faible indices. Quatre couches peuvent en effet suffir pour obtenir un effet reflet tout-à-fait remarquable. Dans ce cas, la première séquence comprend la couche « écran » (soit une couche à faible indice, soit une couche à haut indice), et la seconde séquence comprend de l'oxyde de niobium, de bismuth ou de tungstène notamment d'une épaisseur optique comprise entre 245 et 290 nm, et une dernière couche à faible indice du type $SiO_2$ ou mélange d'oxyde de silicium et d'aluminium, notamment d'une épaisseur optique comprise entre 120 et 150 nm.

Un exemple de cette configuration peut être l'empilement suivant :

verre/$SnO_2$/$SiO_2$/$Nb_2O_5$/$SiO_2$ ou
verre/$SnO_2$/$SiO_2$/$Bi_2O_3$/$SiO_2$ ou
verre/$SnO_2$/$SiO_2$/$WO_3$/$SiO_2$

la couche « écran » en $SiO_2$ « protégeant » la couche en $Nb_2O_5$ qui la recouvre, la couche de $SnO_2$ restant globalement inerte aux alcalins et ne se dégradant pas sous l'effet de la chaleur. Il va de soi que ce type d'empilement peut aussi comporter 6 couches, avec une troisième séquence oxyde haut indice/oxyde bas indice.

Selon une autre configuration, la seconde séquence de l'empilement anti-reflets selon l'invention peut comprendre une couche « globale » à haut indice, le terme « globale » signifiant qu'il s'agit en fait d'une superposition de couches à haut indice, notamment deux ou trois dont au moins une est en oxyde de niobium, de tungstène ou de bismuth. L'exemple d'une telle configuration peut être l'empilement suivant :

$$\text{verre}/SnO_2/SiO_2/\underbrace{Bi_2O_3/SnO_2/Bi_2O_3}/SiO_2$$

$$\text{ou verre}/SnO_2/SiO_2/\underbrace{Nb_2O_5/SnO_2/Nb_2O_5}/SiO_2$$

Selon un troisième mode de réalisation, la couche « écran » selon l'invention se substitue complètement à la première séquence de couches à fort et faible indices, et présente un indice de réfraction intermédiaire, notamment compris entre 1,7 et 1,8. Elle a de préférence une épaisseur optique comprise entre 80 et 120 nm. Une telle couche à indice intermédiaire a un effet optique très similaire à celui d'une séquence couche haut indice/couche bas indice, et présente l'avantage de diminuer le nombre global de couches de l'empilement. Elle est avantageusement à base d'un mélange d'oxyde de silicium et d'étain, de silicium et de zinc, de silicium et de titane, ou encore à base d'oxynitrure de silicium. La proportion relative entre les différents constituants de ces matériaux permet d'ajuster l'indice de réfraction de la couche.

Un exemple de configuration d'empilement utilisant ce type de couche « écran » peut être le suivant :

verre/$SiO_xN_y$/$Nb_2O_5$/$SiO_2$

Là encore, la couche « écran » en $SiO_xN_y$ protège » efficacement la couche de $Nb_2O_5$ qui la recouvre.

Quelque soit le mode de réalisation choisi, l'invention permet la fabrication de substrats verriers porteurs d'un empilement anti-reflets présentant une réflexion lumineuse $R_L$ d'au plus 2%, notamment d'au plus 1%, réflexion qui est conservée à 0,5% ou à 0,3% près, notamment à 0,2% près, et même à ± 0,1 % près si le substrat verrier subit ensuite un traitement thermique du type bombage, trempe, recuit.

De même, leur colorimétrie en réflexion reste quasiment inchangée (notamment dans la tonalité des bleus ou bleus-verts), avec selon le système colorimétrique (L*, a*, b*), des variations de a* et b* en réflexion d'au plus 2, notamment d'au plus 1,5 en valeurs absolues. Globalement, les traitements thermiques n'affectent donc pas l'aspect optique en réflexion de ce type d'empilement anti-reflets, si l'on prend comme référence la sensibilité de l'oeil humain.

Il en découle toute une série d'avantages : une seule configuration de revêtement anti-reflets suffit pour fabriquer des vitrages aussi bien bombés que non bombés, trempés que non trempés.

Il devient inutile d'avoir, d'une part, un type de revêtement dépourvu de couches sensibles aux alcalins pour les substrats à traiter thermiquement, et d'autre part un type de revêtement pouvant posséder ce type de couche, par exemple en $Nb_2O_5$, pour les substrats non destinés à être traités thermiquement. Cela facilite donc la gestion des stocks et permet d'adapter très rapidement la production à des vitrages soit traités, soit non traités, à la demande, sans plus avoir à se préoccuper du type de revêtement anti-reflets.

Un autre avantage est que l'on peut assembler indifféremment, sur une façade de bâtiment, dans une vitrine par exemple, des vitrages à revêtement anti-reflets, les uns traités thermiquement, les autres non traités thermiquement : l'oeil ne pourra pas détecter de disparité dans l'aspect optique global de l'assemblage de vitrages.

Il devient également possible de vendre les vitrages revêtus non traités thermiquement, en laissant à la discrétion de l'acheteur le soin de les traiter thermiquement, en pouvant lui garantir une constance dans leurs propriétés optiques.

De préférence, chacune des faces du substrat verrier est recouverte d'un empilement anti-reflets selon l'invention, afin d'obtenir l'effet anti-reflet maximal.

Selon l'invention, on peut prévoir qu'au moins une des couches à bas indice de l'empilement anti-reflets soit à base d'un mélange d'oxyde de silicium et d'aluminium, (éventuellement fluoré), notamment la dernière couche de l'empilement : une telle couche d'oxyde « mixte » présente en effet une durabilité, notamment chimique, meilleure qu'une couche de $SiO_2$ pure. On sélectionne le taux optimal d'aluminium dans la couche pour obtenir cette meilleure durabilité, sans cependant trop augmenter l'indice de réfraction de la couche par rapport à de la silice pure, pour ne pas affecter les propriétés optiques de l'anti-reflet, l'oxyde d'aluminium ayant en effet un indice d'environ 1,60 à 1,65 supérieur à celui de $SiO_2$ qui est d'environ 1,45.

L'invention a aussi pour objet les vitrages incorporant les substrats revêtus, qu'ils soient monolithiques, feuilletés, ou multiples à lame(s) de gaz intercalaire(s).

Ces vitrages peuvent être utilisés aussi bien en tant que vitrages intérieurs ou extérieurs de bâtiment qu'en tant que verre de protection d'objet du type tableau, vitrine, mobilier verrier comme un comptoir ou une vitrine réfrigérée..., qu'en tant que vitrages automobiles du type pare-brise feuilleté, miroirs, écrans anti-éblouissement pour ordinateurs, verre décoratif.

Le vitrage incorporant le substrat à revêtement anti-reflets selon l'invention peut présenter des propriétés additionnelles intéressantes. Ainsi, il peut s'agir d'un vitrage à fonction de sécurité, comme des vitrages feuilletés commercialisés par SAINT-GOBAIN VITRAGE sous le nom de Stadip, ou de vitrages trempés comme les glaces trempées commercialisées par SAINT-GOBAIN VITRAGE sous le nom de Sekurit. Il peut aussi s'agir de vitrages anti-effraction, comme ceux commercialisés par SAINT-GOBAIN VITRAGE sous le nom de Contrarisc, ou anti-acoustiques, comme ceux commercialisés par SAINT-GOBAIN VITRAGE sous le nom de Contrasonor (doubles vitrages) ou Phonip (vitrages feuilletés), ou encore de protection vis-à-vis du feu (pare-flamme ou coupe-feu).

Le vitrage peut aussi être choisi tel que sur le substrat déjà muni de l'empilement anti-reflets ou sur l'une des faces des autres substrats constitutifs du vitrage, est déposée une couche (ou un empilement de couches) à fonction spécifique, par exemple anti-solaire ou absorbant thermiquement, comme des couches en nitrure de titane, ou encore des couches telles que celles commercialisées sous le nom de Cool-lite ou Antélio ou Cool-lite K par SAINT-GOBAIN VITRAGE, ou encore à fonction anti-ultraviolets, anti-statique (du type couche d'oxyde métallique dopé légèrement conductrice), bas-émissive, comme les couches à base d'argent du type Planitherm ou d'oxyde d'étain dopé du type EKO commercialisées par SAINT-GOBAIN VITRAGE. Dans le cas d'une couche à fonction anti-statique, il est préférable que celle-ci soit disposée sur la face du substrat muni de l'empilement anti-reflets. La couche peut aussi être prévue chauffante (du type couche de métal avec amenées de courant adéquates), ce qui peut-être intéressant notamment pour les vitrines réfrigérées, pour éviter le dépôt de buée à leur surface. Il peut aussi s'agir de couche à propriétés anti-salissures comme une très fine couche de $TiO_2$, ou encore une couche organique hydrophobe à fonction anti-pluie ou hydrophile à fonction anti-buée. Ccomme exemple de couche hydrophobe, on pourra se reporter à la couche à base d'organo-silane fluorée décrite dans les brevets US-5 368 892 et US-5 389 427.

Il peut aussi s'agir d'une couche d'argenture à fonction miroir. Toutes les configurations sont possibles. Ainsi, dans le cas d'un vitrage monolithique à fonction miroir, on a intérêt à déposer le revêtement anti-reflets en face 1 (c'est-à-dire du côté où se trouve le spectateur) et la couche d'argenture en face 2 (c'est-à-dire du côté où le miroir est accroché à une paroi), l'empilement anti-reflets de l'invention évitant ainsi le dédoublement de l'image réfléchie.

Dans le cas d'un double-vitrage, (où l'on numérote conventionnellement les faces des substrats verriers en commençant par la face la plus extérieure), on peut ainsi disposer l'empilement anti-reflets usuellement en face 1, et les autres couches fonctionnelles en face 2 pour un anti-ultraviolets ou un anti-solaire, 3 pour une couche bas-émissive. Dans un double-vitrage, on peut ainsi avoir au moins un empilement anti-reflets sur l'une des faces des substrats et au moins une autre couche ou un autre empilement de couches apportant une fonctionnalité supplémentaire. Le double-vitrage peut aussi comporter plusieurs revêtements anti-reflets, notamment au moins en face 2 ou 3.

Pour un vitrage monolithique 1 on peut prévoir de déposer une couche à fonction anti-statique, associée à un second empilement anti-reflets.

De même, le verre choisi pour le substrat revêtu de l'empilement selon l'invention ou pour les autres substrats qui lui sont associés pour former un vitrage, peut être particulier, par exemple extra-clair, du type Planilux ou teinté du type Parsol, deux produits commercialisés par SAINT-GOBAIN VITRAGE. Il peut être lui-même filtrant vis-à-vis du rayonnement du type ultraviolet. Le ou les substrats peuvent avoir subi des traitements thermiques, que l'empilement anti-reflets selon l'invention est à même de supporter, comme une trempe, un bombage ou même un pliage, c'est-à-dire un bombage avec un très petit rayon de courbure (application pour les vitrines-comptoirs des magasins en particulier).

Le substrat peut aussi avoir subi un traitement superficiel, notamment un dépolissage, l'empilement anti-reflets pouvant être déposé sur la face dépolie ou sur la face opposée.

Le substrat, où l'un de ceux avec lequel il est associé, peut être aussi du type verre décoratif, imprimé, par exemple comme le produit Albarino, commercialisé par SAINT-GOBAIN VITRAGE, ou sérigraphié.

Un vitrage particulièrement intéressant incorporant le substrat à revêtement anti-reflets selon l'invention est le suivant : il s'agit d'un vitrage comportant une structure feuilletée avec deux substrats verriers associés par une feuille de polymère d'assemblage du type polyvinylbutyral. Au moins un des substrats et de préférence les deux, est muni du revêtement anti-reflets selon l'invention, de préférence en face extérieure, notamment selon la séquence :

revêtement anti-reflets/verre/PVB/verre/revêtement anti-reflets

Cette configuration, notamment avec les deux substrats bombés et/ou trempés, permet l'obtention d'un vitrage automobile, et notamment d'un pare-brise, très avantageux : en effet, les normes imposent dans les automobiles des pare-brise à haute transmission lumineuse, d'au moins 75% en incidence normale. Grâce à l'incorporation de revêtements anti-reflets dans une structure feuilletée de pare-brise usuelle, la transmission lumineuse du vitrage s'en trouve augmentée, ce qui autorise d'abaisser légèrement sa transmission énergétique tout en étant encore aux normes en terme de transmission lumineuse. On peut ainsi augmenter l'effet anti-solaire du pare-brise, par exemple par absorption des substrats en verre. Concrètement, on peut ainsi faire passer la valeur de réflexion lumineuse d'un pare-brise feuilleté standard de 8 à moins de 1%, tout en abaissant sa transmission énergétique de 1 à 10% par exemple en la faisant passer de 85 à 81%.

L'invention a également pour objet le procédé de fabrication des substrats verriers à revêtement anti-reflets. Un procédé consiste à déposer l'ensemble des couches, successivement les unes après les autres, par une technique sous vide, notamment par pulvérisation cathodique assistée par champ magnétique. Ainsi, on peut déposer les couches d'oxyde par pulvérisation réactive du métal en question en présence d'oxygène, et les couches de nitrure en présente d'azote.

Un autre choix peut consister à déposer tout ou partie des couches de l'empilement, notamment la ou les premières couches, par une technique de pyrolyse de précurseurs adaptés.

Il peut s'agir d'une pyrolyse en phase solide, en ayant recours à des précurseurs sous forme de poudre (par exemple du dibutyldifluorure d'étain pour faire de l'oxyde d'étain), sous forme liquide par exemple en dissolvant le(s) précurseur(s) dans un solvant, ou sous forme gazeuse. Dans ce dernier cas, le précurseur est mis sous forme gazeuse. Il peut par exemple s'agir de tétraorthosilicate TEOS ou de $SiH_4$ pour faire de l'oxyde de silicium. La pyrolyse peut s'effectuer directement et en continu sur le ruban de verre float chaud, les couches suivantes étant alors déposées ultérieurement sur le verre une fois découpé, par une technique sous vide du type pulvérisation cathodique.

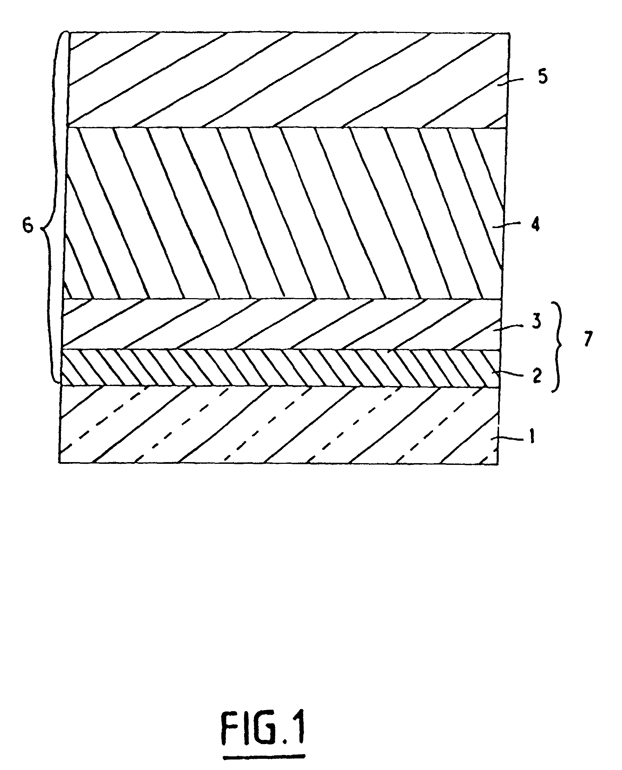

Les détails et caractéristiques avantageuses de l'invention vont maintenant ressortir des exemples suivants non limitatifs, à l'aide de la figure 1.

Cette figure, très schématique, représente en coupe un substrat surmonté d'un empilement anti-reflets selon l'invention (les proportions entre l'épaisseur du substrat et celles des couches n'ont pas été respectées pour en faciliter la lecture). En fait, chacune des faces du substrat est munie d'un empilement identique, mais un seul empilement a été représenté pour plus de clarté. L'utilisation d'un revêtement sur chacune des faces du substrat a été effectué sur l'ensemble des exemples qui suivent.

On précise que dans ces exemples, les dépôts successifs de couches minces se font par pulvérisation cathodique réactive assistée par champ magnétique, mais pourraient être réalisés par toute autre technique sous vide ou du type pyrolyse permettant une bonne maîtrise des épaisseurs de couches obtenues.

Les substrats sur lesquels sont déposés les revêtements anti-reflets sont des substrats de verre silico-sodo-calcique clair du type Planilux et de 3 à 6 mm d'épaisseur, notamment 4 mm.

La figure 1 représentant le substrat de verre 1 qui est revêtu, selon un premier mode de réalisation, sur ses deux faces d'un empilement 6 quadri-couche comportant une alternance de couches minces 2,4 à haut indice et de couches minces 3,5 à bas indice. Un autre mode de réalisation consiste à remplacer les deux premières couches 2, 3 par une couche 7 d'indice intermédiaire.

**EXEMPLE COMPARATIF**

Cet exemple utilise un revêtement quadri-couche composé de la séquence suivante :
verre/$Nb_2O_5$/$SiO_2$/$Nb_2O_5$/$SiO_2$

Les deux couches de $Nb_2O_5$ d'indice de réfraction d'environ 2,3 sont obtenues par pulvérisation réactive en présence d'oxygène à partir de cibles de niobium, les deux couches de $SiO_2$ d'indice de réfraction d'environ 1,47 sont obtenues par pulvérisation réactive en présence d'oxygène à partir de cibles de silicium dopé au bore ou à l'aluminium.

Le tableau 1 ci-dessous indique l'épaisseur géométrique en nanomètres de chacune des couches de l'empilement, numérotées en référence à la figure 1.

## TABLEAU 1

|  | EXEMPLE COMPARATIF |
|---|---|
| $Nb_2O_5$ (2) | 12 |
| $SiO_2$ (3) | 38 |
| $Nb_2O_5$ (4) | 120 |
| $SiO_2$ (5) | 87 |

**EXEMPLE 1 SELON L'INVENTION**

Cet exemple utilise un revêtement anti-reflets quadri-couche, mais selon la séquence suivante :
verre/$SnO_2$/$SiO_2$/$Nb_2O_5$/$SiO_2$

Les trois dernières couches sont obtenues comme précédemment, avec le même indice. La première est obtenue par pulvérisation cathodique réactive en présence d'oxygène à partir d'une cible d'étain, son indice est d'environ 2.

Le tableau 2 ci-dessous indique, pour chacune des couches de l'empilement, numérotées en référence à la figure 1, la gamme d'épaisseurs géométriques préférée en nm ainsi que son épaisseur précise sélectionnée dans ladite gamme.

## TABLEAU 2

| | EXEMPLE 1 SELON L'INVENTION | |
|---|---|---|
| | Gamme préférée | Epaisseur |
| $SnO_2$ (2) | 10 - 30 (15 - 25) | 19 |
| $SiO_2$ (3) | 25 - 40 (30 - 38) | 33 |
| $Nb_2O_5$ (4) | 100 - 150 (110 - 130) | 115 |
| $SiO_2$ (5) | 70 - 100 (80 - 90) | 88 |

Les substrats revêtus selon l'exemple comparatif et selon l'exemple 1 sont ensuite soumis à un traitement thermique du type recuit consistant en un chauffage pendant 1 heure à une température de 550°C.

Les tableaux 3 et 4 ci-dessous indiquent, pour chacun des deux substrats, avant puis après traitement thermique, les données photométriques suivantes :

- valeur de réflexion lumineuse $R_L$ en %, selon l'illuminant $D_{65}$, à incidence normale,
- valeurs de $a^*_{(R)}$, $b^*_{(R)}$ et $L^*_{(R)}$ en réflexion, sans unité, selon le système de colorimétrie (L, a*, b*)

## TABLEAU 3

| | EXEMPLE COMPARATIF | |
|---|---|---|
| | Avant traitement thermique | Après traitement thermique |
| $R_L$ | 0,7 | 0,5 |
| $a^*_{(R)}$ | - 2,8 | 3,5 |
| $b^*_{(R)}$ | - 0,0 | - 2 |
| $L^*_{(R)}$ | 6,5 | 5 |

## TABLEAU 4

| | EXEMPLE 1 SELON L'INVENTION | |
|---|---|---|
| | Avant traitement thermique | Après traitement thermique |
| $R_L$ | 0,55 | 0,66 |
| $a^*_{(R)}$ | - 6,55 | - 7,94 |
| $b^*_{(R)}$ | - 0,47 | + 0,89 |
| $L^*_{(R)}$ | 4,98 | 5,98 |

On a par ailleurs pris 2 substrats munis chacun sur une de leurs faces de l'empilement défini au tableau 2, et on les assemble par une feuille de PVB standard pour fabriquer un pare-brise selon la séquence :

revêtement (6)/verre/PVB/verre/revêtement (6)

Par rapport à une même séquence dépourvue des 2 revêtements anti-reflets (6), la $R_L$ est de 0,4% au lieu de 8,1%. La transmission énergétique $T_E$ est quant à elle de 81,5% au lieu de 85%.

### EXEMPLE 2 SELON L'INVENTION

Cet exemple utilise un revêtement anti-reflets tri-couche, suivant la séquence suivante :

verre/$SiO_xN_y$/$Nb_2O_5$/$SiO_2$

Les deux dernières couches sont faites comme les couches de $Nb_2O_5$ et $SiO_2$ des exemples précédents. La première couche est obtenue par pulvérisation cathodique réactive en présence d'une atmosphère $O_2/N_2$ à partir d'une cible de silicium dopé à l'aluminium ou au bore.

La couche de $SiO_xN_y$ a un indice de réfraction d'environ 1,75 . Le tableau 5 ci-dessous indique pour chacune des trois couches leurs gammes d'épaisseur géométrique préférées ainsi que leurs épaisseurs précises.

## TABLEAU 5

| | EXEMPLE 2 | |
|---|---|---|
| | Gamme préférée | Epaisseur |
| $SiO_xN_y$ (7) | 45 - 75 <br> (55 - 65) | 61 |
| $Nb_2O_5$ (3) | 90 - 130 <br> (100 - 110) | 104 |
| $SiO_2$ (4) | 70 - 100 <br> (80 - 90) | 86 |

Le substrat est apte à supporter le même type de traitement thermique que celui subi dans les exemples précédents, sans modification notable de son aspect en réflexion.

### EXEMPLE 3 SELON L'INVENTION

Cet exemple utilise, comme l'exemple 1, un revêtement anti-reflets à quatre couches, avec l'empilement

suivant :

verre/$SnO_2$/$SiO_2$/$Bi_2O_3$/$SiO_2$

L'oxyde de bismuth est déposé par pulvérisation cathodique réactive à partir d'une cible de bismuth.

Le tableau 6 ci-dessous indique pour chacune des couches, leurs gammes d'épaisseur géométrique préférées, et leurs épaisseurs géométriques précises : en nanomètres :

## TABLEAU 6

| | EXEMPLE 3 | |
| --- | --- | --- |
| | Gamme préférée | Epaisseur |
| $SnO_2$ (2) | 10 - 30 (15 - 25) | 21 |
| $SiO_2$ (2) | 20 - 35 (25 - 32) | 28 |
| $Bi_2O_3$ (4) | 80 - 130 (95 - 115) | 108 |
| $SiO_2$ (5) | 70 - 110 (80 - 96) | 86 |

La réflexion lumineuse $R_L$ du substrat ainsi revêtu est de 0,50%. Les valeurs de $a^*_{(R)}$ et $b^*_{(R)}$ en réflexion sont respectivement d'environ -3 et d'environ -1.

### EXEMPLE 4 SELON L'INVENTION

Cet exemple utilise un empilement anti-reflets à six couches. La seconde couche à haut indice en partant du substrat étant en fait constituée de 3 couches d'oxyde d'indice supérieur ou égal à 2. L'empilement est le suivant : (épaisseurs géométriques exprimées en nanomètres, indiquées sous chacune des couches) :

$$\text{verre / } SnO_2\text{/ } SiO_2/\underline{Bi_2O_3/SnO_2/Bi_2O_3}/SiO_2$$
$$20 \quad 33 \quad 37 \quad 42 \quad 43 \quad 87$$

La réflexion lumineuse $R_L$ du substrat ainsi revêtue est de 0,45%. Les valeurs de $a^*$ et $b^*$ en réflexion sont respectivement d'environ -3 et -1.

### EXEMPLE 5 SELON L'INVENTION

Cet exemple utilise un empilement anti-reflets à 5 couches, la seconde couche à haut indice en partant du substrat étant en fait constituée de deux couches superposées d'oxyde d'indice supérieur à 2. L'empilement est le suivant (mêmes conventions sur les épaisseurs qu'à l'exemple 4) :

$$\text{verre / } SnO_2\text{/ } SiO_2\text{/ } \underline{SnO_2/Bi_2O_3}/SiO_2$$
$$21 \quad 35 \quad 36 \quad 86 \quad 86$$

La réflexion lumineuse du substrat est alors de 0,60%, avec des valeurs de $a^*$ et $b^*$ en réflexion approximativement de -3 et -1.

**EXEMPLE 6 SELON L'INVENTION**

Cet exemple utilise un empilement anti-reflets de structure voisine de l'exemple 5, en inversant la séquence des deux couches superposées à haut indice. L'empilement est donc le suivant :

$$\text{verre} \ / \ SnO_2 / \ SiO_2 / \ Bi_2O_3 / SnO_2 / \ /SiO_2$$

$$20 \qquad 36 \qquad 83 \quad 38 \qquad 88$$

La réflexion lumineuse du substrat est autour de 0,50%, avec des valeurs de a* et b* en réflexion approximativement de -3 et -1.

On remarque que dans les exemples 4 à 6 qui précèdent, les épaisseurs de chacune des couches constitutives des empilements anti-reflets ont été sélectionnées afin d'obtenir en réflexion une colorimétrie correspondant à des valeurs de a* et b* négatives et, en valeurs absolues, pas trop élevées, ce qui signifie des couleurs en réflexion dans les bleus-vert agréables et peu intenses. Il va de soi que l'on est encore dans le cadre de l'invention en choisissant des tructures d'empilements similaires, mais avec des épaisseurs de couches un peu différentes, par exemple 10 à 20% plus minces ou plus épaisses.

On peut ainsi, en adaptant des épaisseurs, adapter la colorimétrie en réflexion selon les besoins.

On peut souligner en outre que les empilements des exemples 3 à 6 précédents sont aptes à supporter sans modification optique significative le traitement thermique subi par l'empilement selon l'exemple 1.

On peut par ailleurs noter que l'on peut avantageusement remplacer les dernières couches de $SiO_2$ des empilements des exemples selon l'invention par des couches de mélange d'oxyde de silicium et d'aluminium : on rend ainsi la couche plus dure, surtout plus résistante chimiquement (résistance à l'humidité) ce qui est intéressant si l'empilement anti-reflets doit être disposé sur la face extérieure d'un vitrage. Cependant le taux d'aluminium doit être contrôlé, pour ne pas trop augmenter l'indice de réfraction de la couche. Un taux de par exemple 8 à 12% en poids d'aluminium par rapport au $SiO_2$ est satisfaisant.

De tous ces résultats peuvent être tirées les conclusions suivantes. Du tableau 4, on voit que :

- les revêtements anti-reflets selon l'invention confèrent aux substrats verriers des valeurs de réflexion lumineuse très faibles, inférieures à 1% (à comparer à la réflexion lumineuse d'environ 8% qu'auraient ces mêmes substrats sans revêtement),
- leur couleur en réflexion est également très neutre, notamment dans les bleus-verts très atténués en ce qui concerne l'exemple 1, ce qui est une tonalité esthétique, recherchée actuellement, notamment pour les vitrages équipant des bâtiments,
- leurs caractéristiques optiques ne se modifient pas, ou très peu, lorsque les substrats sont soumis à un traitement à forte température, et tout particulièrement leur aspect en réflexion.

Ainsi, la variation dans la valeur de $R_L$, notée $\Delta R_L$, est minime, inférieure à 0,3% et de l'ordre de 0,1%. Et ce qui est peut-être plus important encore, c'est que leur colorimétrie favorable en réflexion est maintenue : la variation du facteur a*, notée $\Delta$a* est en valeurs absolues inférieure à 2,0, notamment à 1,35. La variation du facteur b* notée $\Delta$b* est du même ordre. Si l'on calcule la valeur de $\Delta E$ à partir des données du tableau 4, valeur définie par $\sqrt{\Delta L^{*2} + \Delta a^{*2} + \Delta b^{*2}}$, c'est-à-dire la racine carrée de la somme des carrés des variations de a*, b* et L*, on trouve une valeur inférieure à 3, notamment de 2,2, valeur qui atteint les limites de la sensibilité de l'oeil humain, qui n'arrive donc pas, ou à peine, à faire la distinction entre un substrat à empilements anti-reflets traité thermiquement et le même substrat non-traité, restant dans les deux cas dans une tonalité bleu -vert .

Cela n'est pas le cas de l'exemple comparatif 1. Si l'on se reporte au tableau 3, on voit en effet que le traitement thermique modifie notablement l'aspect en réflexion du substrat : dans l'exemple selon l'invention, la tonalité bleue-verte était maintenue, alors que dans cet exemple comparatif, la couleur en réflexion bascule du vert au mauve/violet, tonalité peu appréciée sur le plan esthétique. Ce changement de couleur est parfaitement repérable par un observateur : si l'on calcule pour cet exemple comparatif, la valeur de $\Delta E$ précédemment définie, on aboutit à un chiffre d'environ 7,7, valeur appartenant à la plage de sensibilité de l'oeil humain.

Les raisons de ce changement d'aspect sont que la première couche d'oxyde de niobium, c'est-à-dire la plus proche du verre, subit sous l'effet de diffusion des ions sodium $Na^+$ à haute température, une modification structurelle très importante : elle se transforme en un composé mixte avec du sodium et du niobium ne présentant plus aucune des propriétés de l'oxyde de départ.

Il en serait de même pour l'oxyde de tungstène ou de bismuth, l'oxyde de tungstène étant par ailleurs bien connu pour se colorer fortement par insertion d'ions sodium.

L'invention permet donc d'établir un compromis, en conservant dans ses empilements anti-reflets des oxydes du type $Nb_2O_5$, $WO_3$, $CeO_2$ ou $Bi_2O_3$ sensibles aux alcalins, mais en prévoyant de les isoler du verre par des couches « écran » adaptées, ceci afin de fabriquer des vitrages que l'on peut sans crainte durcir, bomber ou tremper après dépôt des empilements.

## Revendications

1. Substrat verrier (1) comportant sur au moins une de ses faces un revêtement anti-reflets (6) fait d'un empilement de couches minces de matériau diélectrique d'indices de réfraction alternativement forts et faibles, *caractérisé en ce que* ledit empilement comprend une (des) couche(s) (4) susceptible(s) de détérioration au contact d'ions alcalins, à fort indice et à base d'oxyde de niobium $Nb_2O_5$, d'oxyde de tungstène $WO_3$, d'oxyde de bismuth Bi203 ou d'oxyde de cérium $CeO_2$, *et en ce qu'en* vue de prévenir la modification des propriétés optiques dudit revêtement (6) au cas où ledit substrat (1) est soumis à un traitement thermique du type trempe, bombage ou recuit, ladite (lesdites) couche(s) (4) de l'empilement susceptible(s) de détérioration au contact d'ions alcalins du type ions sodium est (sont) séparée(s) dudit substrat (1) par au moins une couche faisant partie du revêtement anti-reflets (6) et faisant « écran » à la diffusion des alcalins, ladite couche « écran » étant une couche à faible indice de l'empilement disposée sur une couche (2) à fort indice.

2. Substrat verrier (1) selon la revendication 1, *caractérisé en ce que* les couches de matériau diélectrique dites à faible indice (3, 5) ont un indice de réfraction compris entre 1,35 et 1,70, notamment entre 1,38 et 1,65, *et en ce que* les couches de matériau diélectrique dites à fort indice (2, 4) ont un indice de réfraction d'au moins 1,80, notamment compris entre 1,80 et 2,60, de préférence entre 2,10 et 2,35.

3. Substrat verrier (1) selon l'une des revendications précédentes, *caractérisé en ce que* la couche « écran » est la première couche (3) à faible indice de l'empilement (6), de préférence ayant une épaisseur optique comprise entre 40 et 70 nm, notamment d'environ 45 à 60 nm.

4. Substrat verrier (1) selon la revendication 3, *caractérisé en ce que* la couche « écran » (3) à faible indice de réfraction est à base d'oxyde de silicium, d'oxyde d'aluminium dopé du type $Al_2O_3$ :F ou d'un mélange de ces matériaux.

5. Substrat verrier (1) selon la revendication 3 ou 4, *caractérisé en ce que* la couche « écran » (3) à faible indice est disposée sur une couche (2) à fort indice choisie dans un matériau conservant sensiblement les mêmes caractéristiques, notamment optiques, en cas de traitement thermique du substrat, et qui est notamment choisi à base d'oxyde d'étain $SnO_2$, éventuellement dopé, à base d'oxyde de zinc ZnO, d'oxyde de tantale Ta20s ou d'oxyde de zirconium $ZrO_2$.

6. Substrat verrier (1) selon l'une des revendications précédentes, *caractérisé en ce que* le revêtement anti-reflets (6) comprend deux séquences successives de couches à fort et faible indices, la première séquence (2, 3) comprenant la couche « écran », la seconde séquence (4, 5) comprenant une couche d'oxyde de niobium, ou d'oxyde de bismuth ou d'oxyde de tungstène, notamment d'environ 245 à 290 nm d'épaisseur optique, et une couche à faible indice du type $SiO_2$ ou mélange d'oxydes de silicium et d'aluminium, notamment de 120 à 150 nm d'épaisseur optique.

7. Substrat verrier (1) selon la revendication 6, *caractérisé en ce que* le revêtement anti-reflets (6) comprend l'empilement $SnO_2/SiO_2$ /$Nb_2O_5/SiO_2$, $SnO_2/SiO_2/Bi_2O_3/SiO_2$ ou $SnO_2/SiO_2/WO_3/SiO_2$.

8. Substrat verrier (1) selon la revendication 6, *caractérisé en ce que* la seconde séquence (4, 5) comprend une couche « globale » à haut indice composée d'une superposition de couches à haut indice, notamment deux ou trois, dont au moins une couche en oxyde de niobium, de bismuth ou de tungstène.

9. Substrat verrier (1) selon la revendication 8, *caractérisé en ce que* le revêtement anti-reflets (6) comprend l'empilement $SnO_2/SiO_2/Bi_2O_3$ /$SnO_2/Bi_2O_3/SiO_2$ ou $SnO_2/SiO_2/Nb_2O_5/SnO_2/Nb_2O_5/SiO_2$.

10. Substrat verrier (1) selon l'une des revendications précédentes, *caractérisé en ce qu'au* moins une des couches à bas indice de l'empilement anti-reflets (6) est à base d'un mélange d'oxyde de silicium et d'oxyde d'aluminium, notamment la dernière couche (5) de l'empilement.

**11.** Substrat verrier (1) selon l'une des revendications précédentes, *caractérisé en ce qu'il* comporte un revêtement anti-reflets (6) sur chacune de ses faces.

**12.** Substrat verrier (1) selon l'une des revendications précédentes, *caractérisé en ce qu'il* présente une réflexion lumineuse $R_L$ d'au plus 2%, notamment d'au plus 1% et une couleur bleue ou bleu-vert en réflexion, avec des variations de $R_L$ d'au plus 0,3%, notamment d'au plus 0,1% et des variations de a* et b* en réflexion d'au plus 2, notamment d'au plus 1,5 après traitement thermique du type bombage, trempe, recuit.

**13.** Vitrage monolithique, feuilleté ou multiple à lame(s) de gaz intercalaire(s), *caractérisé en ce qu'il* incorpore le substrat (1) à revêtement anti-reflets (6) selon l'une des revendications précédentes.

**14.** Vitrage selon la revendication 13, *caractérisé en ce qu'il* est à fonction anti-solaire, de sécurité, anti-effraction, anti-acoustique ou de protection vis-à-vis du feu.

**15.** Vitrage selon la revendication 13 ou 14, *caractérisé en ce que* sur le substrat (1) muni du revêtement anti-reflets (6) ou sur au moins un des autres substrats constitutifs dudit vitrage, est déposée une couche (ou un empilement de couches) à fonction anti-solaire, absorbant, anti-ultraviolet, anti-statique, bas-émissive, chauffante ou anti-salissures, ou encore une couche organique hydrophobe à fonction anti-pluie ou hydrophile à fonction anti-buée, ou encore une couche d'argenture à fonction miroir.

**16.** Vitrage selon la revendication 13 ou 14, *caractérisé en ce que* le substrat (1) muni du revêtement anti-reflets (6), ou au moins un des autres substrats constitutifs dudit vitrage, a subi un traitement de surface du type dépolissage, ou est imprimé ou sérigraphié.

**17.** Vitrage selon l'une des revendications 13 à 16, *caractérisé en ce que* le substrat (1) muni du revêtement anti-reflets (6) ou au moins un des autres substrats constitutifs dudit vitrage est en verre extra-clair, ou en verre teinté dans la masse, ou trempé, ou armé, ou bombé ou plié, ou filtrant les ultraviolets.

**18.** Vitrage selon l'une des revendications 13 à 17, *caractérisé en ce qu'il* comporte une structure feuilletée comprenant deux substrats verriers associés par une feuille de polymère d'assemblage du type polyvinylbutyral, au moins un des substrats, et de préférence les deux substrats, étant muni d'un revêtement anti-reflets (6), de préférence en face extérieure, notamment selon la séquence :
revêtement anti-reflets (6)/verre/PVB/verre/revêtement anti-reflets (6)

**19.** Vitrage selon la revendication 18, *caractérisé en ce que* les substrats sont bombés et/ou trempés, en vue de constituer un vitrage automobile, notamment un pare-brise.

**20.** Application des substrats (1) à revêtement anti-reflets (6) selon l'une des revendications 1 à 12 ou des vitrages selon l'une des revendications 13 à 18 à la fabrication de vitrages intérieurs ou extérieurs de bâtiment, ou de verre de protection d'objets du type tableaux, de vitrages automobiles du type pare-brise feuilleté, de miroirs, d'écrans anti-éblouissement pour ordinateurs, de verre décoratif, de vitrine, de mobilier verrier du type comptoir de magasin ou vitrine réfrigérée.

**21.** Procédé de fabrication du substrat verrier (1) à revêtement anti-reflets (6) selon l'une des revendications 1 à 13, *caractérisé en ce qu'on* dépose la ou les premières couches du revêtement par pyrolyse de précurseurs adaptés, notamment directement sur le ruban de verre float, et en ce qu'on dépose les couches suivantes par une technique de dépôt sous vide du type pulvérisation cathodique, une fois le verre découpé.

**Patentansprüche**

**1.** Glassubstrat (1), welches auf wenigstens einer Seite eine Antireflexbeschichtung (6) umfaßt, die aus einem Aufbau von dünnen Schichten aus dielektrischem Material mit abwechselnd hohem und niedrigem Brechungsindex hergestellt ist, **dadurch gekennzeichnet, daß** der Aufbau (eine) Schicht(en) (4) auf Basis von Nioboxid, $Nb_2O_5$, Wolframoxid, $WO_3$, Wismutoxid, $Bi_2O_3$, oder Ceroxid, $CeO_2$, mit hohem Brechungsindex enthält, die in der Lage ist (sind), bei Kontakt mit Alkaliionen beschädigt zu werden, und daß, um eine Veränderung der optischen Eigenschaften der Beschichtung (6) zu verhindern, wenn das Substrat (1) einer Wärmebehandlung wie Vorspannen, Biegen oder Kühlen im Kühlofen unterzogen wird, die Schicht(en) (4) des Aufbaus, die in der Lage ist (sind), bei Kontakt mit Alkaliionen wie Natriumionen beschädigt zu werden, von diesem Substrat (1) durch mindestens eine Schicht getrennt ist (sind), die ein Bestandteil der Antireflexbeschichtung (6) ist und eine Barriere gegen die Diffusion der Alkalien bildet, wobei diese Barriereschicht eine Schicht mit niedrigem Brechungsindex des Aufbaus und auf einer Schicht (2) mit hohem Brechungsindex angeordnet ist.

2. Glassubstrat (1) nach Anspruch 1, **dadurch gekennzeichnet, daß** die Schichten aus dielektrischem Material mit niedrigem Brechungsindex (3, 5) einen Brechungsindex von 1,35 bis 1,70, insbesondere zwischen 1,38 und 1,65, besitzen, **und** daß die Schichten aus dielektrischem mit hohem Brechungsindex (2, 4) einen Brechungsindex von mindestens 1,80, insbesondere von 1,80 bis 2,60, und vorzugsweise zwischen 2,10 und 2,35 besitzen.

3. Glassubstrat (1) nach einem der vorhergehenden Ansprüche, **dadurch gekennzeichnet, daß** die Barriereschicht die erste Schicht (3) mit niedrigem Brechungsindex des Aufbaus (6) ist und vorzugsweise eine optische Dicke von 40 bis 70 nm und insbesondere von etwa 45 bis 60 nm besitzt.

4. Glassubstrat (1) nach Anspruch 3, **dadurch gekennzeichnet, daß** die Barriereschicht (3) mit niedrigem Brechungsindex auf Basis von Siliciumoxid und dotiertem Aluminiumoxid vom Typ $Al_2O_3$:F oder einem Gemisch dieser Materialien ist.

5. Glassubstrat (1) nach Anspruch 3 oder 4, **dadurch gekennzeichnet, daß** die Barriereschicht (3) mit niedrigem Brechungsindex auf einer Schicht (2) mit hohem Brechungsindex angeordnet ist, die aus einem Material ausgewählt ist, das seine speziell optischen Eigenschaften bei einer Wärmebehandlung des Substrats im wesentlichen beibehält und insbesondere auf Basis von gegebenenfalls dotiertem Zinnoxid, $SnO_2$, von Zinkoxid, ZnO, Tantaloxid, $Ta_2O_5$, oder Zirconiumoxid, $ZrO_2$, ausgewählt ist.

6. Glassubstrat (1) nach einem der vorhergehenden Ansprüche, **dadurch gekennzeichnet, daß** die Antireflexbeschichtung (6) zwei aufeinander folgende Folgen von Schichten mit hohem und niedrigem Brechungsindex umfaßt, wobei die erste Folge (2, 3) die Barriereschicht und die zweite Folge (4, 5) eine Schicht aus Nioboxid, Wismutoxid oder Wolframoxid, insbesondere mit einer optischen Dicke von etwa 245 bis 290 nm, und eine Schicht vom Typ $SiO_2$ oder aus einem Gemisch von Siliciumoxid und Aluminiumoxid mit niedrigem Brechungsindex und insbesondere einer optischen Dicke von 120 bis 150 nm enthält.

7. Glassubstrat (1) nach Anspruch 6, **dadurch gekennzeichnet, daß** die Antireflexbeschichtung (6) den Aufbau $SnO_2/SiO_2/Nb_2O_5/SiO_2$, $SnO_2/SiO_2/Bi_2O_3/SiO_2$ oder $SnO_2/SiO_2/WO_3/SiO_2$ umfaßt.

8. Glassubstrat (1) nach Anspruch 6, **dadurch gekennzeichnet, daß** die zweite Folge (4, 5) eine "Gesamtschicht" mit hohem Brechungsindex enthält, die aus einer Abfolge von Schichten, insbesondere zwei oder drei, mit hohem Brechungsindex aufgebaut ist, wovon mindestens eine Schicht aus Nioboxid, Wismutoxid oder Wolframoxid besteht.

9. Glassubstrat (1) nach Anspruch 8, **dadurch gekennzeichnet, daß** die Antireflexbeschichtung (6) den Aufbau $SnO_2/SiO_2/Bi_2O_3/SnO_2/Bi_2O_3/SiO_2$ oder $SnO_2/SiO_2/Nb_2O_5/SnO_2/Nb_2O_5/SiO_2$ umfaßt.

10. Glassubstrat (1) nach einem der vorhergehenden Ansprüche, **dadurch gekennzeichnet, daß** mindestens eine der Schichten mit niedrigem Brechungsindex des Antireflexaufbaus (6), insbesondere die letzte Schicht (5) des Aufbaus, auf Basis eines Gemischs aus Siliciumoxid und Aluminiumoxid ist.

11. Glassubstrat (1) nach einem der vorhergehenden Ansprüche, **dadurch gekennzeichnet, daß** es auf beiden Seiten eine Antireflexbeschichtung (6) umfaßt.

12. Glassubstrat (1) nach einem der vorhergehenden Ansprüche, **dadurch gekennzeichnet, daß** es einen Lichtreflexionsgrad $R_L$ von höchstens 2 %, insbesondere höchstens 1 %, und bei Reflexion eine blaue oder blaugrüne Färbung mit Schwankungen von $R_L$ von höchstens 0,3 %, insbesondere höchstens 0,1 %, und Schwankungen von a* und b* bei Reflexion von höchstens 2, insbesondere höchstens 1,5, nach einer Wärmebehandlung wie Biegen, Vorspannen und Kühlen im Kühlofen aufweist.

13. Einscheiben-, Verbund- oder Mehrfachverglasung mit Gasfüllung(en), **dadurch gekennzeichnet, daß** sie das Substrat (1) mit Antireflexbeschichtung (6) nach einem der vorhergehenden Ansprüche enthält.

**14.** Verglasung nach Anspruch 13, **dadurch gekennzeichnet, daß** sie eine Sonnenschutz-, Sicherheits-, Einbruchschutz-, Schalldämmungs- oder Brandschutzfunktion ausübt.

**15.** Verglasung nach Anspruch 13 oder 14, **dadurch gekennzeichnet, daß** auf dem mit der Antireflexbeschichtung (6) versehenen Substrat (1) oder auf wenigstens einem der anderen Substrate, welche die Verglasung bilden, eine Schicht (bzw. ein Schichtaufbau) mit vor Sonne schützender, absorbierender, vor UV-Strahlung schützender, antistatischer, niedrig emittierender, beheizender oder vor Verschmutzung schützender Funktion oder auch eine hydrophobe mit regenabweisender Funktion bzw. hydrophile organische Schicht mit Beschlag-verhindernder Funktion oder auch eine Silberschicht mit Spiegelwirkung aufgebracht ist.

**16.** Verglasung nach Anspruch 13 oder 14, **dadurch gekennzeichnet, daß** das mit der Antireflexbeschichtung (6) versehene Substrat (1) oder wenigstens eines der anderen Substrate, welche die Verglasung bilden, einer Oberflächenbearbeitung wie Mattschleifen unterzogen oder geprägt oder mit Siebdruck versehen worden ist.

**17.** Verglasung nach einem der Ansprüche 13 bis 16, **dadurch gekennzeichnet, daß** das mit der Antireflexbeschichtung (6) versehene Substrat (1) oder wenigstens eines der anderen Substrate, welche die Verglasung bilden, aus einem Glas besteht, das extraklar, in der Masse eingefärbt, vorgespannt, mit Drahtgewebe verstärkt, gewölbt, gebogen oder UV-Strahlung filternd ist.

**18.** Verglasung nach einem der Ansprüche 13 bis 17, **dadurch gekennzeichnet, daß** sie eine Verbundstruktur umfaßt, welche zwei Glassubstrate enthält, die durch eine Kunststoffolie vom Typ Polyvinylbutyral miteinander verbunden sind, wobei mindestens eines der Substrate und vorzugsweise beide vorzugsweise auf der Außenseite mit einer Antireflexbeschichtung (6), insbesondere gemäß der Folge Antireflexbeschichtung (6)/Glas/PVB/Glas/Antireflexbeschichtung (6), versehen ist (sind).

**19.** Verglasung nach Anspruch 18, **dadurch gekennzeichnet, daß** die Substrate gebogen und/oder vorgespannt werden, um eine Autoverglasung und insbesondere eine Frontscheibe zu bilden.

**20.** Verwendung der Substrate (1) mit Antireflexbeschichtung (6) gemäß einem der Ansprüche 1 bis 12 oder der Verglasungen gemäß einem der Ansprüche 13 bis 18 zur Herstellung von Innen- bzw. Außenverglasungen für Gebäude, Schutzglas für Gegenstände wie Bilder, Autoverglasungen wie mehrschichtige Frontscheiben, Spiegeln, entspiegelten Computerbildschirmen, Dekorglas, Schaufensterglas, Glasmöbeln wie Ladentischen oder Kühltruhenglas.

**21.** Verfahren zur Herstellung des Glassubstrats (1) mit Antireflexbeschichtung (6) nach einem der Ansprüche 1 bis 13, **dadurch gekennzeichnet, daß** nach dem Zuschneiden des Glases die erste(n) Schicht(en) der Beschichtung durch Pyrolyse geeigneter Vorläufer insbesondere direkt auf das Floatglasband aufgebracht wird (werden), **und daß** die nachfolgenden Schichten durch ein Vakuumabscheidungsverfahren vom Typ Kathodenzerstäubung aufgebracht werden.

**Claims**

**1.** Glass substrate (1) having on at least one of its faces an anti-reflection layer (6) formed from a stack of thin, dielectric material films having alternately high and low refractive indexes, characterized in that said stack comprises a film or films (4) liable to deteriorate in contact with alkali metal ions, having a high index and based on niobium (V) oxide $Nb_2O_5$, tungsten (VI) oxide $WO_3$, bismuth (III) oxide $Bi_2O_3$ or cerium (IV) oxide $CeO_2$, and in that to prevent a modification to the optical properties of said layer (6) when said substrate (1) is exposed to a heat treatment of the tempering, bending or annealing type, said film or films (4) of the stack liable to deteriorate in contact with alkali metal ions such as sodium ions are separated from said substrate by at least one film forming part of the anti-reflection layer (6) and forming a "shield" to the diffusion of alkalis, said "shield" film being a low index film of the stack placed on a high index film (2).

**2.** Glass substrate (1) according to claim 1, characterized in that the low index dielectric material films (3, 5) have a refractive index between 1.35 and 1.70, particularly between 1.38 and 1.65, and in that the high index dielectric material films (2, 4) have a refractive index of at least 1.80, particularly between 1.80 and 2.60 and preferably between 2.10 and 2.35.

3. Glass substrate (1) according to one of the preceding claims, characterized in that the "shield" film is the first low index film (3) of the stack (6), preferably having an optical thickness between 40 and 70 nm, particularly approximately 45 to 60 nm.

4. Glass substrate (1) according to claim 3, characterized in that the low refractive index "shield" film (3) is based on silicon oxide, aluminium oxide in doped form of the type $Al_2O_3$:F or a mixture of these materials.

5. Glass substrate (1) according to claim 3 or 4, characterized in that the low index "shield" film (3) is placed on a high index film (2) chosen from a material substantially maintaining the same, particularly optical characteristics, in the case of a heat treatment of the substrate and which is in particular based on tin (IV) oxide $SnO_2$, optionally in doped form, zinc oxide $ZnO$, tantalum (V) oxide $Ta_2O_5$ or zirconium (IV) oxide $ZrO_2$.

6. Glass substrate (1) according to one of the preceding claims, characterized in that the anti-reflection layer (6) comprises two successive sequences of high and low index films, the first sequence (2, 3) incorporating the "shield" film, the second sequence (4, 5) incorporating a film of niobium oxide, or bismuth oxide, or tungsten oxide, particularly with an optical thickness of approximately 245 to 290 nm, and a low index film of the $SiO_2$ type or a mixture of silicon and aluminium oxides, particularly with an optical thickness of 120 to 150 nm.

7. Glass substrate (1) according to claim 6, characterized in that the anti-reflection layer (6) comprises the stack $SnO_2/SiO_2/Nb_2O_5/SiO_2$, $SnO_2/SiO_2/Bi_2O_3/SiO_2$ or $SnO_2/SiO_2/WO_3/SiO_2$.

8. Glass substrate (1) according to claim 6, characterized in that the second sequence (4, 5) comprises a "global" high index film constituted by a superimposition of high index films, particularly two or three films, whereof at least one is a film of niobium, bismuth or tungsten oxide.

9. Glass substrate (1) according to claim 8, characterized in that the anti-reflection layer (6) comprises the stack $SnO_2/SiO_2/Bi_2O_3/SnO_2/Bi_2O_3/SiO_2$ or $SnO_2/SiO_2/Nb_2O_5/SnO_2/Nb_2O_5/SiO_2$.

10. Glass substrate (1) according to one of the preceding claims, characterized in that at least one of the low index films of the anti-reflection stack (6) is based on a mixture of silicon oxide and aluminium oxide, particularly the final film (5) of the stack.

11. Glass substrate according to one of the preceding claims, characterized in that it has an anti-reflection layer (6) on each of its faces.

12. Glass substrate (1) according to one of the preceding claims, characterized in that it has a light reflection $R_L$ of at the most 2%, particularly at the most 1% and a blue or blue-green colour in reflection, with variations of the $R_L$ of at the most 0.3%, particularly at the most 0.1% and variations of a* and b* in reflection of at the most 2, particularly at the most 1.5, following the heat treatment of the bending, tempering or annealing type.

13. Monolithic, laminated or multiple glazing having an intercalated tongue or tongues of gas, characterized in that it incorporates the substrate (1) with the anti-reflection layer (6) according to one of the preceding claims.

14. Glazing according to claim 13, characterized in that it has a sun shielding, safety, burglar-proof, sound insulating or fire-resisting function.

15. Glazing according to claim 13 or 14, characterized in that the substrate (1) provided with the anti-reflection layer (6) or on at least one of the other substrates constituting the glazing, is deposited a film (or a stack of films) having a sun shielding, absorbing, anti-ultraviolet, anti-static, low-emissive, heating or anti-dirtying function, or a hydrophobic, organic film having an anti-rain function or hydrophilic film having an anti-vapour function, or a silvering film having a mirror function.

16. Glazing according to claim 13 or 14, characterized in that the substrate (1) provided with the anti-reflection layer (6), or at least one of the other substrates constituting said glazing, has undergone a surface treatment of the sandblast finish type, or is printed or screen printed.

17. Glazing according to one of the claims 13 to 16, characterized in that the substrate (1) provided with the anti-reflection layer (6) or at least one of the other substrates constituting said glazing is of flint glass, or pot-coloured glass, or is tempered, wired, bent, curved or filters ultraviolet rays.

18. Glazing according to one of the claims 13 to 17, characterized in that it has a laminated structure incorporating two glass substrates combined by an assembly polymer sheet of the polyvinyl butyral type, at least one and preferably the two substrates being provided with an anti-reflection layer (6), preferably on the outer face and in particular in accordance with the sequence: antireflection layer (6)/glass/PVB/glass/antireflection layer (6).

19. Glazing according to claim 18, characterized in that the substrates are bent and/or tempered, with a view to constituting a car glazing, particularly a windscreen.

20. Application of the substrates (1) with anti-reflection layer (6) according to one of the claims 1 to 12 or glazings according to one of the claims 13 to 18 to the manufacture of internal or external building glazings, or protective glass for objects such as panels, car glazings of the laminated windscreen type, mirrors, anti-dazzle screens for computers, decorative glass, display windows, glass furniture of the shop counter or refrigerated display cabinet type.

21. Process for the production of the glass substrate (1) with the anti-reflection layer (6) according to one of the claims 1 to 13, characterized in that the first film or films of the layer are deposited by pyrolysis of appropriate precursors, particularly directly on the float glass ribbon, and in that the following films are deposited by a vacuum deposition method of the cathodic sputtering type, once the glass has been cut.

FIG.1